# EUROPÄISCHE PATENTANMELDUNG

(11) **EP 2 551 656 A1**
(43) Veröffentlichungstag der Anmeldung: **30.01.2013**
(21) Anmeldenummer: 11175795.1
(22) Anmeldetag: 28.07.2011
(51) Int. Cl.: G01J 5/04, H02B 13/065

(54) **Temperaturmessvorrichtung**

(71) Anmelder: ABB Technology AG, 8050 Zürich (CH)
(72) Erfinder: Buchter Florian, 1700 Fribourg (CH); Bühler, Tilo, 5430 Wettingen (CH)
(74) Vertreter: ABB Patent Attorneys

(57) **Zusammenfassung**

Vorrichtung (1) zum Überwachen einer Temperatur eines Bauteils, insbesondere zum Messen einer Temperatur eines zumindest teilweise auf Hoch- oder Mittelspannungspotential liegenden Hoch- oder Mittelspannungsbauteils, mit einer Befestigungseinrichtung (5) zum Befestigen der Vorrichtung (1) an dem Bauteil, einem Sensor zum Überwachen der Temperatur des Bauteils, und einem zwischen dem Sensor und der Befestigungseinrichtung (5) angeordneten Isolationshohlkörper (15) zum elektrischen Isolieren des Sensors gegenüber der Befestigungseinrichtung (5), wobei der Sensor zum Erfassen einer Wärmestrahlung geeignet ist.

## Beschreibung

### Gebiet der Erfindung

Die Erfindung betrifft eine Vorrichtung zum Überwachung einer Temperatur eines Bauteils nach dem Anspruch 1, einen Generatorschalter und eine Verwendung einer Vorrichtung zum Überwachen einer Temperatur nach den nebengeordneten Ansprüchen.

### Stand der Technik

Die technische Ausrüstung von Kraftwerken umfasst Generatorschalter. Die Generatorschalter sind üblicherweise zwischen dem zur Stromerzeugung genutzten Generator und einem Transformator angeordnet. Der Transformator dient dazu, eine Verbindung zum öffentlichen Stromnetz herzustellen. Die Generatorschalter werden benötigt, um bei einer Fehlfunktion eine schnelle Netztrennung zu ermöglichen. Generatorschalter sind üblicherweise auf Mittelspannungsniveau bei relativ großen Strömen in der Größenordnung von 10 kA bis 50 kA und darüber ausgelegt. Unter diesen Betriebsbedingungen erzeugt der Generatorschalter eine nennenswerte Verlustwärme aufgrund unvermeidbarer oder unter wirtschaftlichen Gesichtspunkten nicht vermeidbarer elektrischer Widerstände. Die elektrischen Widerstände setzen sich aus ohmschen Widerständen und schleifenden elektrischen Kontakten zusammen. Die elektrischen Verluste können trotz von Widerständen im Mikro-Ohm-Bereich zu Verlusten von mehreren Kilowatt an Wärme führen.

Für einen störungsfreien Betrieb ist es daher notwendig, die Temperatur von Generatorschaltern zu überwachen. Die Überwachung dient dazu, zu überprüfen, ob eine ausreichende Kühlung der gesamten Anlage und insbesondere der Generatorschalter vorliegt. Die Temperaturüberwachung wird auch insbesondere deswegen durchgeführt, da in modernen Kraftwerksanlagen hitzeempfindliche Bauteile vorhanden sind, auch solche, welche Spannungen isolieren.

Es ist daher notwendig, die Temperatur von Generatorschaltern zu überwachen. Das Grundproblem besteht darin, dass der Generatorschalter auf Mittelspannungsniveau ist, wohingegen ein Sensor zum Erfassen der Temperatur mit einer Kontrolleinheit verbunden wird, welche gegenüber der Mittelspannung zu isolieren ist.

Aus dem Stand der Technik ist es bekannt, Temperatur-Überwachungsvorrichtungen mit einem mechanischen Bewegungsaufnehmer zu versehen, welcher eine Bewegung eines Wandlers aufnimmt. Sie zeigt die WO 2009/056475 einen entsprechenden Wandler, welcher sich in einem thermischen Kontakt mit einem zu überwachenden Bauteil, also beispielsweise einem Generatorschalter, befindet. Als Wandler können Metalle verwendet werden, welche sich temperaturabhängig in einer ersten oder einer zweiten Form befinden. Das mechanische Übertragungselement, welches aus einem isolierenden, spannungsfesten Material besteht, dient dazu, Formänderungen des Wandlers an einen Bewegungssensor weiterzuleiten, welcher wiederum ein elektrisches Signal erzeugt oder einen Kontakt schließt oder unterbricht. Der Bewegungssensor liegt dabei auf Niederspannungsniveau oder Erdpotential. Zum Schutz der mechanischen Übertragungseinheiten ist ein Hohlkörper vorgesehen.

Der Stand der Technik bietet die Möglichkeit, zu überwachen, ob die Temperatur des Bauteils einen bestimmten Grenzwert überschreitet. Eine auch nur niedrig auflösende Messung ist nicht oder nur unter hohem Aufwand möglich.

### Offenbarung der Erfindung

Wünschenswert ist eine Beseitigung oder eine Verringerung der Nachteile des beschriebenen Standes der Technik, insbesondere soll eine Vorrichtung zum Überwachen einer Temperatur eines Bauteils angegeben werden, wobei es mit der Vorrichtung möglich sein sollte, in einem Messbereich zumindest niedrig auflösend die Temperatur des Bauteils auf Spannungsniveau zu überwachen. Weiterhin ist es Aufgabe der Erfindung, allgemein eine gegenüber dem Stand der Technik verbesserte Vorrichtung, ein gegenüber dem Stand der Technik verbessertes Bauteil mit einer solchen Vorrichtung, einen entsprechend verbesserten Generatorschalter und eine Verwendung einer Vorrichtung zum Überwachen einer Temperatur eines Bauteils anzugeben.

Ein Aspekt betrifft eine Vorrichtung nach dem Anspruch 1. Ausführungsformen der Vorrichtung zum Überwachen einer Temperatur sind besonders geeignet, um eine Temperatur eines zumindest teilweise auf Hochspannungs- oder Mittelspannungspotential liegenden Hoch- oder Mittelspannungsbauteils zu messen. Insbesondere sind Ausführungsformen geeignet, eine Temperatur eines Generatorschalters oder eines Gehäuses eines Generatorschalters zu messen. Die Vorrichtung umfasst eine Befestigungseinrichtung zum Befestigen der Vorrichtung an dem Bauteil, wobei die Befestigungseinrichtung beispielsweise einen Flansch oder einen Bajonettverschluss umfasst.

Der Sensor der Vorrichtung zum Überwachen der Temperatur des Bauteils ist zum Erfassen einer Wärmestrahlung geeignet. Bevorzugte Ausführungsformen umfassen ein Pyrometer oder ein Wärmestrahlungssensor. Pyrometer bieten den Vorteil, dass sie eine vergleichsweise genaue Temperaturmessung über einen Messbereich ermöglichen, wobei die Messgröße im Messbereich zumindest im Wesentlichen stufenlos erfasst wird. Dabei bedeutet "im wesentlichen stufenlos" üblicherweise eine Abstufung von maximal 1°C oder 0,1°C. Typische Messbereiche reichen bis zu 200°C oder 250°C. Eine Untergrenze typischer Messbereiche ist üblicherweise 50°C oder 20°C. Messbereiche von Pyrometern von Ausführungsformen umfassen zumindest einen Bereich zwischen 20°C und 180°C, bevorzugter zumindest zwischen 50°C und 120°C.

Zwischen dem Sensor und der Befestigungseinrichtung ist typischerweise ein Isolationshohlkörper angeordnet zum elektrischen Isolieren des Sensors gegenüber der Befestigungseinrichtung. Die hohle Ausführung des Isolationshohlkörpers bietet den Vorteil, dass innerhalb des Isolationshohlkörpers ein Strahlengang für Wärmestrahlung vorgesehen werden kann. Der Strahlengang für die Wärmestrahlung ist geeignet, um eine von dem Bauteil oder von einem auf dem Bauteil angeordneten Übertragungselement ausgesandte Strahlung zu dem Sensor zu übermitteln. Das Bauteil ist bei Ausführungsformen ein Generatorschalter (Generator Circuit Breaker, GCB). Der Generatorschalter ist vorzugsweise für Mittelspannung oder Hochspannung ausgelegt, wobei Mittelspannung insbesondere einen Bereich zwischen 10 kV und 50 kV, Hochspannung einen Bereich über 50 kV bezeichnet. Weitere bevorzugte Einteilungen sind eine Untergrenze für Mittelspannung von 1 kV oder eine obere Grenze für Mittelspannung oder untere Grenze für Hochspannung von 75 kV.

Typischerweise ist das Pyrometer ein fokussierendes Pyrometer. Fokussierende Pyrometer bieten den Vorteil, dass eine Anordnung des Pyrometers an einem Ende des Isolationshohlkörpers ausreicht, um durch den Hohlraum des Isolationshohlkörpers hindurch eine Temperatur zu erfassen. Typische Pyrometer bieten ein Abstand/Spot-Verhältnis von mindestens 1:10 oder besser von mindestens 1:15 oder mindestens 1:20. Ein Abstand/Spot-Verhältnis von 1:20 bedeutet, dass bei einem Abstand von 20 cm ein Spot mit einem Durchmesser von etwa 1 cm erfasst wird.

Ausführungsformen der Vorrichtung umfassen einen Deckel zum Abdecken der Befestigungseinrichtung. Dies bietet den Vorteil, dass ein geschlossener Hohlraum geschaffen kann, welcher zumindest den Hohlraum oder Innenraum des Isolationshohlkörpers und einen Durchgang durch die Befestigungseinrichtung umfasst. Der Deckel deckt die Befestigungseinrichtung typischerweise zum Bauteil hin ab. Bei typischen Ausführungsformen ist der Deckel mit einer Außenseite zur Anlage an dem Bauteil ausgebildet, wobei die der Außenseite gegenüberliegende Seite schwarz eingefärbt ist. Typischerweise bildet der Deckel einen schwarzen Strahler. Dies bietet den Vorteil, dass eine genaue Temperaturmessung mit einem Pyrometer möglich ist. Der Deckel ist bei typischen Ausführungsformen aus Aluminium gefertigt, weitere mögliche Materialien sind Metalle oder Metalllegierungen, auch eine Ausführung in Stahl oder Kupfer ist möglich. Dies gilt analog für die Befestigungseinrichtung, welche ebenso typischerweise aus Aluminium gefertigt ist. Bei Ausführungsformen besteht die Befestigungsvorrichtung zumindest zum Teil aus Metall. Beispiele für Metall sind Aluminium, Kupfer, Eisen oder Metalllegierungen. Der Isolationshohlkörper ist typischerweise ein Epoxy-Guss-Teil oder zumindest teilweise aus Keramik oder Glas gefertigt. Typische Ausführungen umfassen einen Isolationshohlkörper. Üblicherweise ist der Isolationshohlkörper innen beschichtungsfrei. Dies ermöglicht einen einfachen Aufbau. Fokussierende Pyrometer bieten den Vorteil, dass eine Innenbeschichtung auf dem Isolationshohlkörper nicht zwingend nötig ist. Innenbeschichtungen können jedoch Vorteil im Hinblick auf die Messgenauigkeit oder die Empfindlichkeit gegenüber Temperaturschwankungen der Umgebung bieten.

Ausführungsformen der Erfindung bieten den Vorteil eines kostengünstigen und genauen Messsystems. Weiterhin ist das Messsystem über lange Zeit wartungsfrei, insbesondere bei einer Kapselung des Hohlraums, welcher durch den Isolationshohlkörper gebildet wird. Durch eine Kapselung des Isolationshohlkörpers und angrenzender Bauteile, wie beispielsweise der Befestigungseinrichtung, ist es möglich, den Strahlengang für die Wärmestrahlung zumindest im wesentlichen frei von Verunreinigungen zu halten. Dies macht Überdruckanlagen zum Reinhalten des Strahlengangs oder Hochtemperatur-Linsenreinigungssysteme zu nicht zwingend erforderlichen Maßnahmen. Gleichwohl können bei Ausführungsformen auch solche Maßnahmen eingesetzt werden, beispielsweise um die Lebensdauer zu verlängern.

Bei Ausführungsformen ist die Befestigungseinrichtung unmittelbar auf einem Gehäuse eines Bauteils oder auf dem Bauteil selbst befestigt oder angeschraubt oder mit diesem durch Bolzen verbunden. Typischerweise ist bei solchen Konstruktionen die Oberfläche des Bauteils oder des Gehäuses schwarz gefärbt. Dies bietet den Vorteil, dass das Gehäuse des Bauteils oder das Bauteil selbst als schwarzer Strahler fungieren. Auf diese Weise wird der Aufbau der Vorrichtung vereinfacht. Bevorzugte Längen für den Isolationshohlkörper sind eine Länge von mindestens 10 cm, mindestens 15 cm oder mindestens 18 cm. Dies ermöglicht eine ausreichende Isolierung bei Mittelspannung.

Ein Vorteil von Ausführungsformen ist, dass keine elektronischen Teile auf Spannungspotential, das heißt Hoch- oder Mittelspannungspotential, während des Betriebes gelangen. Ein Pyrometer ermöglicht ein analoges Temperaturausgabesignal.

Vorzugsweise umfasst die Befestigungseinrichtung eine axiale Öffnung. Die axiale Öffnung ist vorzugsweise in Verlängerung des Hohlraums des Isolationshohlkörpers ausgerichtet. Auf diese Weise wird ein durchgehender Strahlengang ermöglicht. Die axiale Öffnung wird typischerweise durch das Gehäuse des Bauteils, das Bauteil selbst oder durch den Deckel abgeschlossen. Dort wird üblicherweise die Wärmestrahlung ausgesandt.

Bei typischen Ausführungsformen ist an dem Isolationshohlkörper eine Aufnahme zur Aufnahme des Sensors befestigt. Die Aufnahme ist üblicherweise an dem gegenüberliegenden Ende wie die Befestigungseinrichtung an dem Isolationshohlkörper angeordnet. Dies bietet den Vorteil einer ausreichenden Isolierung. Die Aufnahme bietet den Vorteil, Standard-Pyrometer an dem Isolationshohlkörper anzuordnen. Die Aufnahme ist bei typischen Ausführungsformen aus einem Metall, insbesondere Aluminium, Kupfer, Eisen oder einer Legierung mit einem dieser Metalle oder Stahl gefertigt. Aluminium bietet den Vorteil einer einfachen Bearbeitbarkeit bei guter Wärmeleitfähigkeit und geringen Kosten.

Der Isolationshohlkörper ist bei typischen Ausführungsformen als Isolationsrohr gefertigt. Ein Isolationsrohr bietet den Vorteil, dass es einen innen liegenden Hohlraum aufweist und gegenüber mechanischen Belastungen stabil ist.

Bei typischen Ausführungsformen bilden die Befestigungseinrichtung, der Isolationshohlkörper und die Aufnahme ein durchgängige Öffnung in einer Empfangsrichtung des Sensors. Die Empfangsrichtung des Sensors ist beispielsweise bei einem fokussierenden Pyrometer die Richtung der Fokussierung des Pyrometers. Die durchgängige Öffnung ist üblicherweise fluchtend, insbesondere sind eine axiale Öffnung der Befestigungseinrichtung, ein innerer Hohlraum des Isolationshohlkörpers oder des Isolationsrohrs und eine axiale Öffnung der Aufnahme fluchtend ausgerichtet. Auf diese Weise wird ein Hohlraum als durchgängige Öffnung geschaffen. Bei Montage der Befestigungseinrichtung an dem Bauteil oder an einem Gehäuse des Bauteils oder bei Montage eines Deckels an der Befestigungseinrichtung wird vorzugsweise ein abgeschlossener Hohlraum geschaffen, um Verunreinigungen zu vermeiden.

Typische Ausführungsformen umfassen einen abgeschlossenen Hohlraum, welcher einen Strahlengang für Wärmestrahlung in Richtung des Sensors ermöglicht. Vorzugsweise ist der Hohlraum gekapselt, insbesondere luftdicht oder wasserdicht. Dies macht eine Wartung über einen langen Zeitraum überflüssig und erhöht die Zuverlässigkeit der Vorrichtung zum Überwachen einer Temperatur. Der abgeschlossene Hohlraum stellt sicher, dass eine optische Linse des Pyrometers sauber gehalten werden kann. Bei Ausführungsformen ist die Befestigungseinrichtung geeignet, abgedichtet an einem zu überwachenden Bauteil befestigt zu werden, so dass eine Oberfläche des Bauteils, die Befestigungseinrichtung, der Isolationshohlkörper oder das Isolationsrohr, die Aufnahme und der Sensor einen abgeschlossenen Hohlraum bilden.

Ein weiterer Aspekt betrifft ein Bauteil mit einer Vorrichtung zum Überwachen einer Temperatur des Bauteils in einer der beschriebenen Ausführungsformen oder Kombinationen. Ein typisches Beispiel für ein solches Bauteil ist ein Generatorschalter, insbesondere für Mittelspannung. Weitere Beispiele für solche Bauteile können anderer in Betrieb Wärme dissipierende und Hoch- oder Mittelspannung führende Bauteile, wie beispielsweise Kabel oder andere Schalter sein.

Ein weiterer Aspekt betrifft die Verwendung einer Vorrichtung in einer der oben beschriebenen Ausführungen oder Kombinationen zum Überwachen der Temperatur eines Generatorschalters.

### Kurze Beschreibung der Zeichnungen

In den Zeichnungen sind typische Ausführungsformen der Erfindung dargestellt und werden in der folgenden Beschreibung genauer beschrieben. Die Zeichnungen zeigen:

Fig. 1 in einer schematischen geschnittenen Ansicht eine erste Ausführung einer Vorrichtung zum Überwachen einer Temperatur und

Fig. 2 in einer schematischen, geschnittenen Ansicht eine zweite Ausführung einer Vorrichtung zum Überwachen einer Temperatur.

### Ausführungsformen

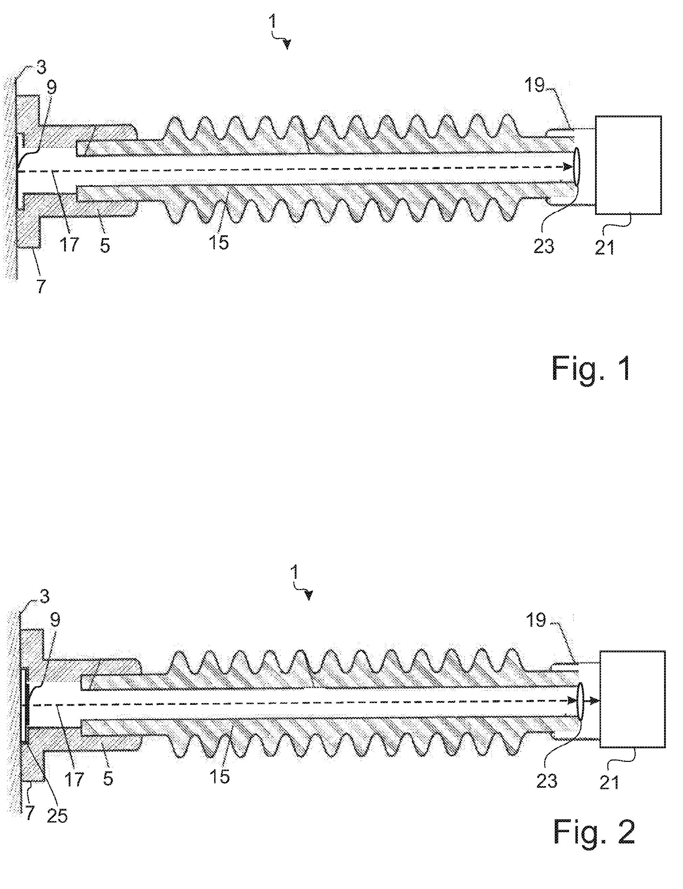

In der Fig. 1 ist schematisch in einer geschnittenen Ansicht eine Vorrichtung 1 zum Überwachen einer Temperatur eines Bauteils, hier eines Generatorschalters 3, gezeigt. Das Bauteil kann auch ein Hochspannungsschalter oder ein anderes Bauteil, insbesondere ein Spannung führendes Bauteil sein. In der Fig. 1 ist lediglich ein Ausschnitt des auf Spannungspotential befindlichen Schaltkammergehäuses des Generatorschalters 3 gezeigt.

Zum Befestigen der Vorrichtung 1 am Schaltkammergehäuse des Generatorschalter 3 ist eine Befestigungseinrichtung 5 vorgesehen, welche einen Flansch 7 umfasst. Mit dem Flansch 7 ist es möglich, die Vorrichtung 1 an dem Generatorschalter 3 mittels Bolzen zu befestigen. Weitere Möglichkeiten sind Schnellverschlüsse oder ein Anschweißen des Flansches 7. Vorzugsweise ist die Grenzfläche zwischen dem Flansch 7 der Befestigungseinrichtung 5 und dem Generatorschalter 3 abdichtend gegenüber Feuchtigkeit, gegebenenfalls auch gegenüber Luft. Auf diese Weise wird ein Eintritt von Feuchtigkeit und Schmutz in den Strahlengang der Vorrichtung 1 vermieden.

Die Oberfläche des Schaltkammergehäuses des Generatorschalters 3 ist im Bereich der Befestigungseinrichtung 5, besonders innerhalb des Flansches 7 mit einer schwarzen Einfärbung 9 versehen. Mit der schwarzen Einfärbung 9 wirkt die entsprechende Oberfläche des Generatorschalters 3 als schwarzer Strahler. Weitere Ausführungsformen umfassen keine oder andere Einfärbungen der Oberfläche des Generatorschalters oder eines Gehäuses des Generatorschalters. Eine schwarze Einfärbung bietet den Vorteil, dass unter Umständen eine höhere Messgenauigkeit erzielt werden kann.

In der Befestigungseinrichtung 5 ist ein Isolationshohlkörper 15 aufgenommen, welcher elektrisch isolierend wirkt. Der Isolationshohlkörper 15 ist als Isolationsrohr ausgebildet und weist einen in axialer Richtung verlaufenden Hohlraum oder Durchgang auf, welcher bei der Ausführungsform benutzt wird, um Wärmestrahlung, welche von dem Generatorschalter 3 im Bereich der schwarzen Einfärbung 9 imitiert wird, in Richtung eines Sensors zu leiten. Die Wärmestrahlung ist als Strahlengang 17 in der Fig. 1 schematisch gezeigt.

An dem der Befestigungseinrichtung 5 gegenüberliegenden Ende des Isolationshohlkörpers 15 ist eine Aufnahme 19 vorgesehen, welche an den Isolationshohlkörper 15 anschließt. Sowohl der Übergang von der Befestigungseinrichtung 5 zu dem Isolationshohlkörper 15 als auch der Übergang von dem Isolationshohlkörper 15 zu der Aufnahme 19 ist abdichtend ausgeführt. Die Befestigungseinrichtung 5 und die Aufnahme 19 weisen in axialer Richtungen Durchgangsöffnungen auf, welche sich in Richtung des Hohlraums des Isolationshohlkörpers 15 erstrecken, um den Strahlengang 17 zu ermöglichen. Die Aufnahme 19 dient dazu, ein Pyrometer 21 aufzunehmen, welches abgedichtet mit der Aufnahme 19 verbunden ist. Das Pyrometer 21 ist als fokussierendes Pyrometer ausgeführt, wobei die Richtungsempfindlichkeit ein Abstand/Spot-Verhältnis von 20:1 aufweist.

Das Pyrometer 21 weist eine optische Linse 23 auf, welche durch die abdichtenden Verbindungen der Vorrichtung 1 vor äußeren Umwelteinflüssen geschützt ist. Die Befestigungseinrichtung 5 und die Aufnahme 19 sind jeweils aus Aluminium gefertigt. Die Befestigungseinrichtung 5 weist im Betrieb das Potential des Generatorschalters auf, wohingegen die Aufnahme 19 geerdet ist. Auf diese Weise ist das Pyrometer vor schädlichen Spannungen geschützt. Der Isolationshohlkörper 15 ist als Epoxy-Guss-Teil gefertigt.

In der Fig. 2 ist eine weitere Ausführungsform einer typischen Vorrichtung gezeigt, wobei für gleiche oder ähnliche Teile wie in der Fig. 1 gleiche Bezugszeichen in der Beschreibung verwendet werden. Aus diesem Grund werden nicht sämtliche Teile noch einmal eingehend erläutert.

Der Unterschied der Ausführungsform der Fig. 1 zu der Ausführungsform der Fig. 1 besteht darin, dass an der Befestigungseinrichtung 5 ein Deckel 25 vorgesehen ist, welcher den durch die Aufnahme 19, den Isolationshohlkörper 15 und die Befestigungseinrichtung 5 gebildeten Hohlkörper zu dem Generatorschalter 3 hin abdeckt. Der Hohlraum wird auf diese Weise zuverlässig verschlossen, da der Deckel 25 abdichtend in der Befestigungseinrichtung 5 aufgenommen ist. Dies bietet den Vorteil, dass die Vorrichtung 1 auch bei einer Demontage von dem Generatorschalter 3 und einer Montage auf einem anderen Bauteil, beispielsweise einem weiteren Generatorschalter, verschlossen bleibt, sodass Verunreinigungen der Linse 23 ausgeschlossen werden.

Der Deckel 25 ist auf seiner Innenseite, das heißt der Seite, welche dem Generatorschalter 3 abgewandt liegt, mit einer schwarzen Einfärbung 9 versehen. Der Deckel 25 selbst ist aus Aluminium gefertigt und leitet die Wärme von dem Generatorschalter 3 zu der schwarzen Einfärbung 9, welche dann als eine Art schwarzer Strahler zur Abstrahlung der Wärmestrahlung in Richtung des Pyrometers 21 dient. Das Pyrometer 21 wird auf diese Weise genutzt, über die Wärmestrahlung die Temperatur des Deckels 25 und damit die Temperatur des Generatorschalters 3 zu ermitteln.

Die Erfindung ist nicht auf das zuvor beschriebene Ausführungsbeispiel beschränkt. Vielmehr wird der Umfang der Erfindung durch die beigefügten Ansprüche definiert.

### Bezugszeichenliste

- 1: Vorrichtung
- 3: Schaltkammergehäuse des Generatorschalters
- 5: Befestigungseinrichtung
- 7: Flansch
- 9: Einfärbung
- 15: Isolationshohlkörper
- 17: Strahlengang
- 19: Aufnahme
- 21: Pyrometer
- 23: Linse
- 25: Deckel

## Patentansprüche

1. Vorrichtung (1) zum Überwachen einer Temperatur eines Bauteils, insbesondere zum Messen einer Temperatur eines auf Hoch- oder Mittelspannungspotential liegenden Hoch- oder Mittelspannungsbauteils, mit
- einer Befestigungseinrichtung (5) zum Befestigen der Vorrichtung (1) an dem Bauteil,
- einem Sensor zum Überwachen der Temperatur des Bauteils, und
- einem zwischen dem Sensor und der Befestigungseinrichtung (5) angeordneten Isolationshohlkörper (15) zum elektrischen Isolieren des Sensors gegenüber der Befestigungseinrichtung (5),
**dadurch gekennzeichnet, dass**
der Sensor zum Erfassen einer Wärmestrahlung geeignet ist.

2. Vorrichtung (1) nach Anspruch 1, **dadurch gekennzeichnet, dass** der Sensor ein Pyrometer (21) umfasst.

3. Vorrichtung (1) nach Anspruch 2, **dadurch gekennzeichnet, dass** das Pyrometer (21) ein fokussierendes Pyrometer (21) ist.

4. Vorrichtung (1) nach einem der vorhergehenden Ansprüche, **gekennzeichnet durch** einen Deckel (25) zum Abdecken der Befestigungseinrichtung (5).

5. Vorrichtung (1) nach Anspruch 4, **dadurch gekennzeichnet, dass** der Deckel (25) eine Außenseite zur Anlage an dem Bauteil aufweist, wobei die der Außenseite gegenüberliegende Seite des Deckels (25) schwarz eingefärbt ist.

6. Vorrichtung (1) nach einem der vorhergehenden Ansprüche, **dadurch gekennzeichnet, dass** die Befestigungseinrichtung (5) zumindest zum Teil aus Metall besteht.

7. Vorrichtung (1) nach einem der vorhergehenden Ansprüche, **dadurch gekennzeichnet, dass** die Befestigungseinrichtung (5) eine axiale Öffnung umfasst.

8. Vorrichtung (1) nach einem der vorhergehenden Ansprüche, **gekennzeichnet durch** eine an dem Isolationshohlkörper (15) befestigte Aufnahme zur Aufnahme des Sensors.

9. Vorrichtung (1) nach Anspruch 8, **dadurch gekennzeichnet, dass** die Befestigungseinrichtung (5), der Isolationshohlkörper (15) und die Aufnahme eine durchgängige Öffnung in einer Empfangsrichtung des Sensors bilden.

10. Vorrichtung (1) nach Anspruch 8 oder 9, **dadurch gekennzeichnet, dass** der Deckel (25), die Befestigungseinrichtung (5), der Isolationshohlkörper (15), die Aufnahme (19) und der Sensor einen abgeschlossenen Hohlraum bilden.

11. Vorrichtung (1) nach Anspruch 8 oder 9, **dadurch gekennzeichnet, dass** die Befestigungseinrichtung (5) geeignet ist, abgedichtet an einem zu überwachenden Bauteil befestigt zu werden, so dass eine Oberfläche des Bauteils, die Befestigungseinrichtung (5), der Isolationshohlkörper (15), die Aufnahme (19) und der Sensor einen abgeschlossenen Hohlraum bilden.

12. Bauteil mit einer Vorrichtung (1) zum Überwachen einer Temperatur des Bauteils nach einem der Ansprüche 1 bis 11.

13. Generatorschalter mit einer Vorrichtung (1) zum Überwachen einer Temperatur des Generatorschalters (3) nach einem der Ansprüche 1 bis 11, wobei die Vorrichtung (1) an einem Schaltkammergehäuse des Generatorschalters (3) befestigt ist.

14. Verwendung einer Vorrichtung (1) nach einem der Ansprüche 1 bis 11 zum Überwachen der Temperatur eines Generatorschalters (3).
